# EUROPEAN PATENT SPECIFICATION

(11) **EP 0 739 564 B1**
(45) Date of publication and mention of the grant of the patent: **05.01.2000**
(21) Application number: 94928029.1
(22) Date of filing: 01.09.1994
(51) Int. Cl.: H04L 29/06

(54) **NETWORK INTERFACE CONTROLLER**
NETZWERKSCHNITTSTELLENSTEUERUNG
SYSTEME DE CONTROLE D'INTERFACE DE RESEAU

(30) Priority: 03.12.1993 US 162521
(43) Date of publication of application: 30.10.1996
(73) Proprietor: NATIONAL SEMICONDUCTOR CORPORATION, Sunnyvale, CA 95086-3737 (US)
(72) Inventor: JOHNSON, J., Scott, Fort Worth, TX 76120 (US)
(74) Representative: Horton, Andrew Robert Grant
(86) International application number: US9410061
(87) International publication number: WO9515641

(56) References cited:
- PATENT ABSTRACTS OF JAPAN vol. 16, no. 166 (E-1193) 22 April 1992 & JP,A,04 013 325 (NIPPON TELEGR & TELEPH CORP) 17 January 1992
- IRE WESCON CONVENTION RECORD, September 1982, NORTH HOLLYWOOD US pages 27.3.1 - 27.3.5 K.E. THOMAS 'Advanced multiprotocol serial communications controllers from ZILOG'
- IBM TECHNICAL DISCLOSURE BULLETIN, vol.34, no.10B, March 1992, NEW YORK US pages 388 - 390 'Data recovery in a communication channel using out of phase clock'
- MINI/MICRO WEST CONFERENCE RECORD, November 1983, USA pages 4.3.1 - 4.3.9 H. LOGAN ET AL. 'An IEEE 802 CSMA/CD controller for the 68000 and general purpose applications'

## Description

### FIELD OF INVENTION

The present invention relates generally to network interface controller systems and methods and, more particularly relates to active clock edge switch with single cycle suppression.

The state of the art is indicated by JP-A-4013325, which describes the detection of approximate coincidence of a leading edge of a clock signal and a data signal and the switching of the clock signal to a phase, shifted clock.

The present invention is defined in the claims. In a practical form, the media access controller system comprises at least one input, at least one output, clock coordinating circuitry with at least one clock input and at least one clock output, and cyclic redundancy check circuitry, receive circuitry and transmit circuitry. The clock coordinating circuitry comprises active clock edge switch circuitry to switch the clock output(s) from a first edge to a second edge to enable data changes on the output(s) to remain approximately centered at a mid-bit time location. The cyclic redundancy check circuitry receives the clock output(s) from the clock coordinating circuitry. The receive circuitry receives at least one data input signal from the input(s). The receive circuitry is coupled to the cyclic redundancy check circuitry and to the clock coordinating circuitry. The receive circuitry works in conjunction with the cyclic redundancy check circuitry to check the data input signal(s) for errors. The transmit circuitry transmits at least one data output signal on the output(s). The transmit circuitry is coupled to the cyclic redundancy check circuitry and to the clock coordinating circuitry which works in conjunction with the cyclic redundancy check circuitry to check the data output signal(s) for errors. The first edge is preferably a rising edge and the second edge is a falling edge, although this is subject to design alterations. The active clock edge switch circuitry comprises circuitry that provides additional single cycle suppression. In addition, the media access controller further comprises tally circuitry to tabulate errors found in the data output signal(s) and the data input signal(s). The active clock edge switch circuitry comprises cycle suppression circuitry to switch the clock output(s) from a first edge to a second edge within one cycle and preferably comprises a multiplexor with a plurality of inputs and an output, and a strobe input. The plurality of inputs is coupled to the clock coordinating circuitry to receive a clock input and an inverted clock input. The strobe input is coupled to a select clock input. The output is coupled to the transmitter and receiver. More particularly, the cycle suppression circuitry comprises an OR gate, a first AND gate, a first flip flop, a second flip flop, an invertor, and a second AND gate. The OR gate has a first and second input and an output, the second input of an OR gate is coupled to a switch input. The first AND gate has a first and second input and an output. The first input of the first AND gate is electrically coupled to a reset input. The first flip flop having an input, an output, an inverted output, a clear input, and a clock input. The input of the first flip flop is coupled to the output of the OR gate. The output of the first flip flop is coupled to the first input of the OR gate. The clock input of the first flip flop is coupled to a first clock input, and the clear input of the first flip flop is coupled to the output of the first AND gate. The second flip flop has an input, an output, an inverted output, a clear input, and a clock input. The clock input is coupled to a second clock input that is delayed (via invertors). The inverted output of the second flip flop is coupled to the second input of first AND gate. The clear signal of the second flip flop is coupled to a reset input. The input is coupled to the input of invertor. The invertor with an input and an output. The second AND gate has a first and second input and an output. The first input is connected to the output of the multiplexor. The second input is coupled to the output of the invertor. The input of the invertor coupled to the output of the first flip flop and to the input of the second flip flop. In addition, a delay line may also be coupled between the output of the first flip flop and the input of the invertor. The media access controller, the clock coordinating circuitry, and the active clock edge switch are integrated circuits that are preferably integrated on a single semiconductor substrate (e.g., silicon).

Further features and advantages will become apparent from the following and more particular description of the invention, as illustrated in the accompanying drawings, wherein:

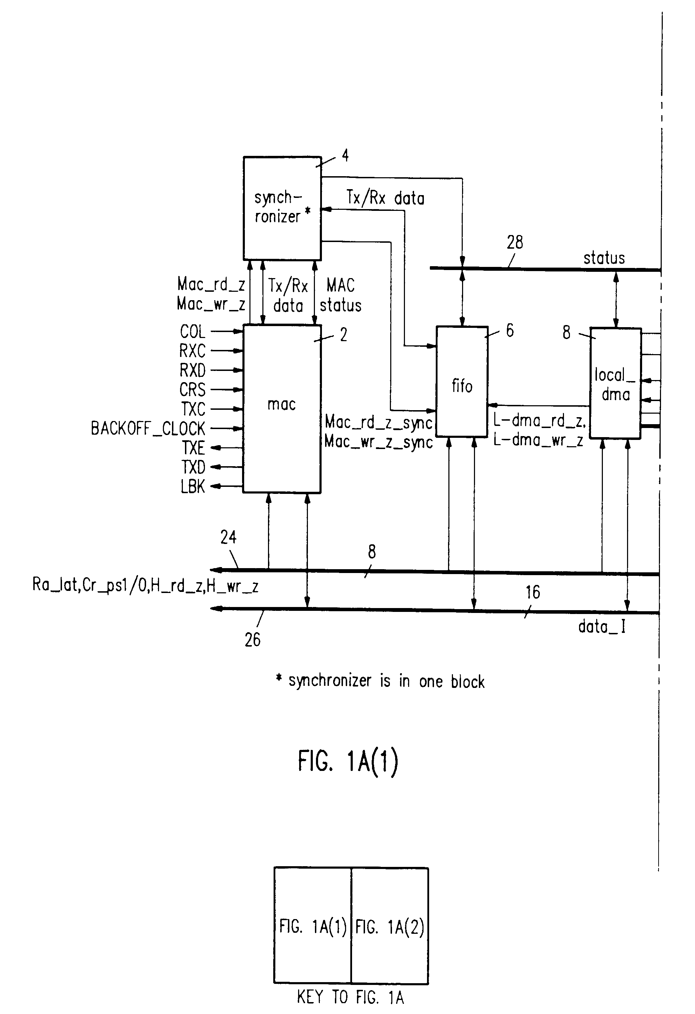

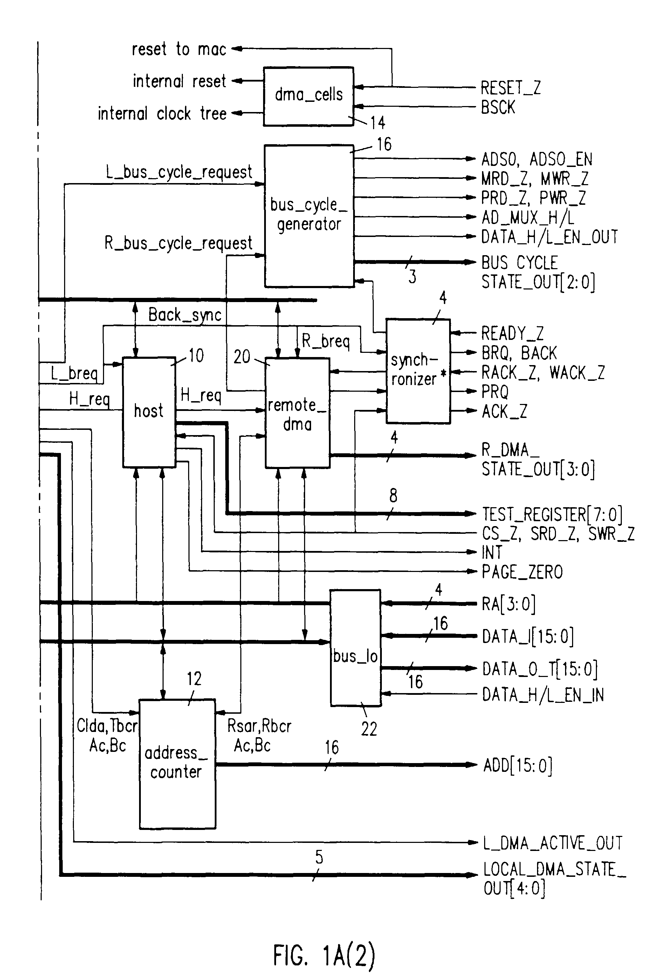

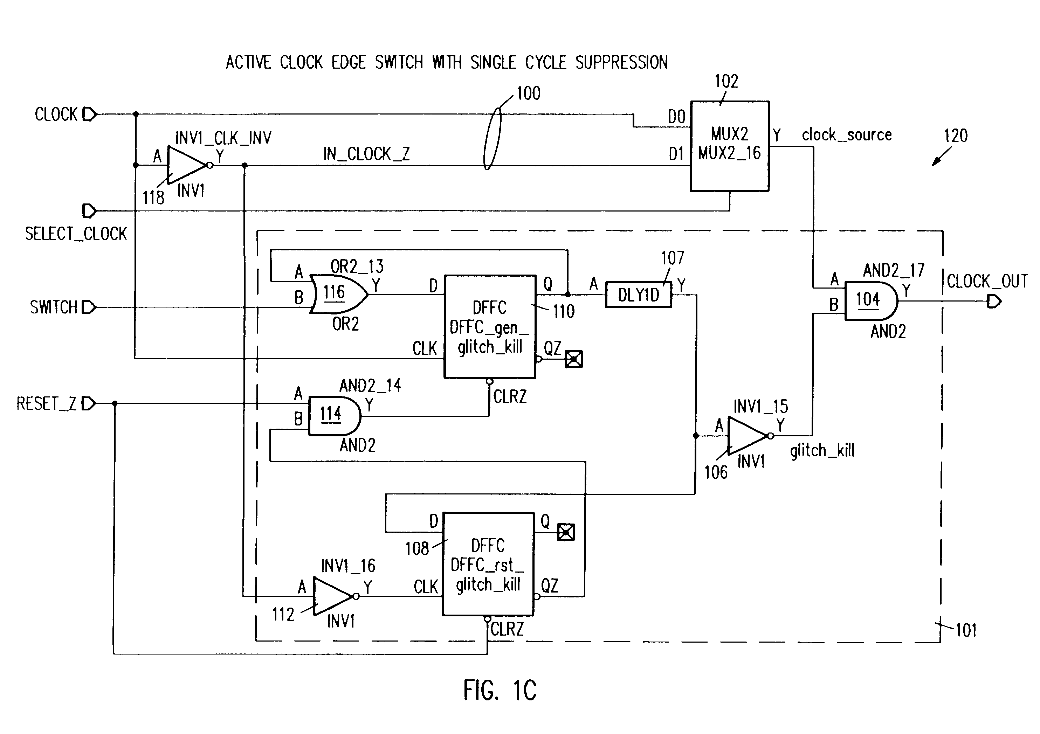

FIGURE 1A is a block diagram of a preferred embodiment of the overall system of enhanced network interface controller standard cell core;

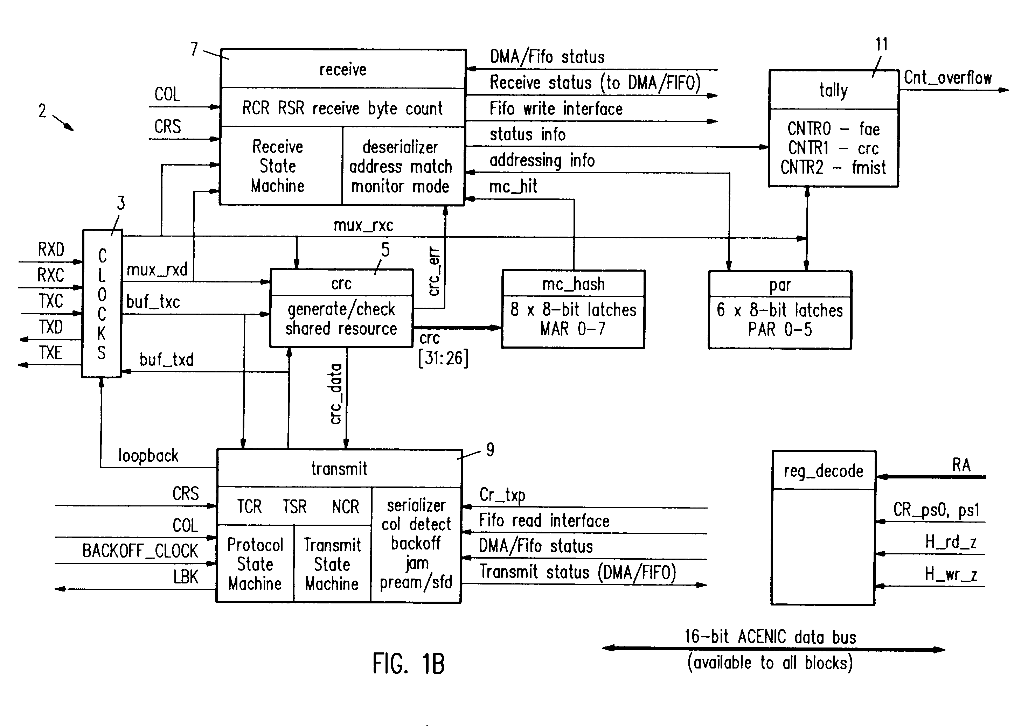

FIGURE 1B is a block diagram of a preferred embodiment of the Media Access Controller (MAC);
FIGURE 1C is a circuit diagram of the active clock edge switch with single cycle suppression; and

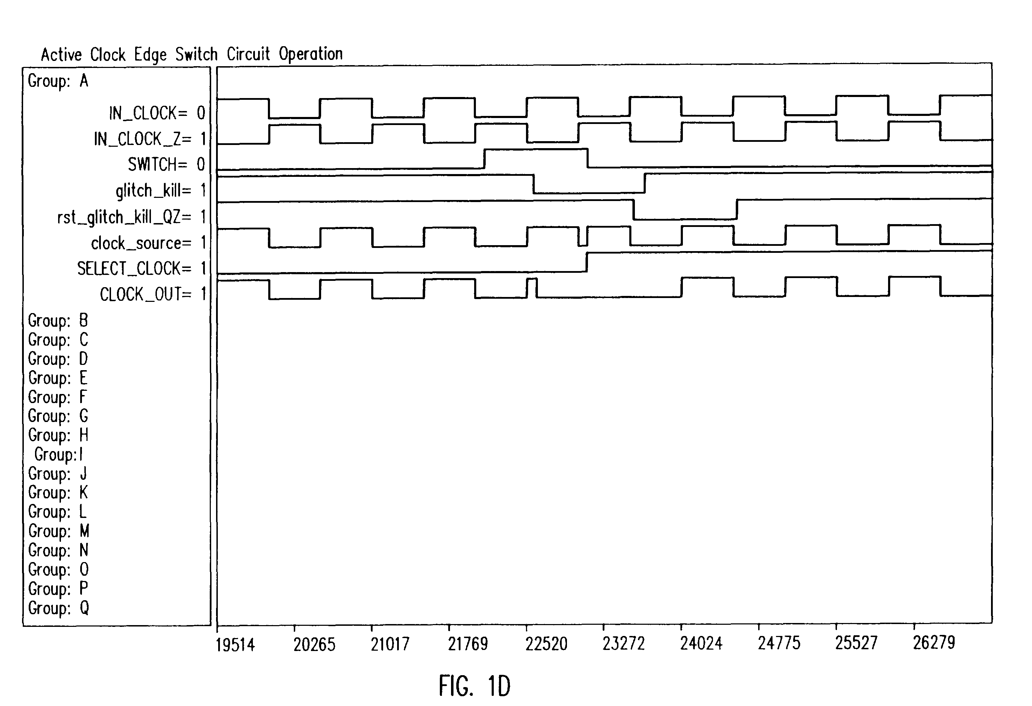

FIGURE 1D is a timing diagram of the circuit shown in Figure 1C.

### DETAILED DESCRIPTION OF THE PREFERRED EMBODIMENTS

FIGURE 1A is a block diagram of a preferred embodiment of the overall system of enhanced network interface controller standard cell. It is preferably a CMOS standard cell functional core designed to be software and network compatible to the DP8390D Network Interface Controller. The DP8390D Network Interface Controller has become an industry standard for Ethernet connectivity in personal computers. There is a tremendous value added in software cost to design the enhanced network controller to be software compatible to the DP8390D.

The preferred embodiment implements all media access control ("MAC") layer functions for transmission and reception of packets of information in accordance with IEEE 802.3 CSMA/CD standard for ethernet local area networks. In general, synchronizer module 4 has Mac_rd_z and Mac_wr_z input lines from MAC module 2, a Tx/Rx data line from FIFO module 6 and a MAC status line from MAC module 2.

Synchronizer module 4 also has BRQ, Back, PRQ, ACK_Z output lines and READY_Z and Rack_Z, and Wack_Z input lines. MAC 2 has COL, RXC, RXD, CRS, TXC, and Backoff_Clock inputs and TXE, TXD, and LBK outputs. Synchronizer module 4 is coupled to FIFO module 6 via Tx/Rx data line as well as with MAC_rd_z_sync and MAC_wr_z_syn lines. Other connections are shown in FIGURE 1A. Local_dma module 8 is coupled to FIFO module 6 via a single L-dma_rd_z, L-dma_wr_z line. Local_dma module 8 is also coupled to bus_cycle generator module 16 via L-bus_cycle_request line. Local_dma module 8 is also coupled to address_counter module 12 via Clda, Tbcr, Ac, Bc lines and to host module 10 and to synchronizer module 4. Local_dma module 8 also has LOCAL_DMA_STATE_OUT and L_DMA_ACTIVE_OUT outputs and H_req input from host module 10. Host module 10 has Cs_Z, SRD_Z, SWR_Z outputs, TEST_Register output, and Page_Zero output and INT output. Synchronizer module 4 is coupled remote_dma module 20. Remote_dma module 8 has 4-bit output R_DMA_State_Out and is coupled to local_dma module 8 and synchronizer module 4. DMA_cells module 14 has Reset_Z and BSCK inputs and internal reset and internal clock tree outputs. Bus_cycle_generator module 16 has outputs ADSO, ADSO_EN, MRD_Z, MWR_Z, PRD_Z, PWR_Z, AD_MUX_H/L and DATA_H/L_EN_OUT and 3-bit Bus_Cycle State_Out outputs. Synchronizer module 4, fifo module 6, local_dma module 8, host module 10, remote_dma module 20 are coupled to status bus 28. MAC module 2, FIFO module 6, local_dma module 8, host module 10, remote_dma module 20 are coupled to 8-bit bus 24 for Ra_lat, Cr_ps1/0, H_rd_z, H_wr_z lines and 16-bit bus 26 for data_t. Significant operational features and characteristics of modules shown in FIGURE 1A will be described in more detail in the corresponding text. Other significant detail is shown in FIGURE 1A itself. In addition, the following table defines the acronyms used to describe numerous connections in FIGURE 1A, which should enable one skilled in the art to fully understand the preferred system embodiment shown in FIGURE 1A. Labels used in FIGURES 1A and 1B are defined in TABLE 1.

**TABLE 1**

| | |
|---|---|
| mac | ethernet media access controller |
| fifo | 16-byte FIFO and control logic |
| local_dma | local DMA state machine and registers |
| remote_dma | remote DMA state machine and registers |
| host | host access asynchronous control and registers |
| synchronizer | synchronizes signals for use in acenic core |
| dma_cells | instantiated cells (clock tree, reset, buffers) |
| bus_cycle_gen | generates buffer memory access cycles for local and remote dma operations |
| bus_io | data bus i/o buffer and latch |
| address_counter | local and remote dma address counter and byte counter with boundary check logic |
| DATA_I | 16-bit data bus input from toplevel chip |
| RA | 4-bit register address |
| DATA_H_EN_IN | tristate control for DATA_O_T[15:7] output bus |
| DATA_L_EN_IN | tristate control for DATA_O_T[7:0] output bus |
| BSCK | bus clock; normal application 20MHz; range 0-40MHz |
| READY_Z | local bus wait state control; high inserts waits; sampled at the trailing edge of BSCK |
| RESET_Z | core reset; async to BSCK |
| BACK | arbitration acknowledge after BREQ is asserted; async to BSCK |
| RACK_Z | remote DMA read acknowledge; async to BSCK |
| WACK_Z | remote DMA write acknowledge; async to BSCK |
| CS_Z | chip select for slave read/write cycles; async to BSCK |
| SRD_Z | slave (host controlled) read control; async to BSCK |
| SWR_Z | slave (host controlled) write control; async to BSCK |
| COL | network collision detect; from endec |
| RXC | network receive clock; from endec |
| RXD | network serial receive data; sync to RXC; from endec |
| TXC | network transmit clock; from endec |
| BACKOFF_CLOCK | backoff clock from toplevel circuit; required for 'mac' block |
| DATA_O_T | 16-bit data output bus; tristateable; byte controlled |
| ADD | 16-bit address bus for local memory |
| ACK_Z | slave access acknowledged from the nic; sync to BSCK |
| DATA_H_EN_OUT | tristate control for data bus; used by external circuit to enable core and external drivers for high/low data |
| DATA_L_EN_OUT | |
| INT | interrupt; level control; async to BSCK |
| BREQ | bus request arbitration signal; sync to BSCK |
| MRD_Z | local memory read control; sync to BSCK |
| MWR_Z | local memory write control; sync to BSCK |
| PRD_Z | remote DMA port read control; sync to BSCK |
| PWR_Z | remote DMA port write control; sync to BSCK |
| PRQ | remote DMA port request; sync to BSCK |
| TXD | network serial transmit data; sync to TXC; to endec |
| TXE | network transmit enable; to endec |
| LBK | network external (to core) loopback test control; to endec |
| L_DMA_ACTIVE_OUT | local or remote DMA indicator |
| ADSO | Address strobe O for muxed AD bus |
| ADSO_EN | ADSO output enable |
| AD_MUX_H | Address data mux control, upper byte |
| AD_MUX_L | Address data mux control, lower byte |
| PAGE_ZERO | Combinational nor of bits 7 and 6 (PS1, PS0) of the Command register |
| Mac_rd_z/Mac_wr_z | read and write strobes from the mac to the fifo |
| Tx/Rx data | 8 bit unidirectional buses to transfer data between the mac and fifo via the Mac_rd_z/Mac_wr_z strobes |
| Mac_rd_z_sync/Mac_wr_z _sync | synchronized versions of the above signals |
| Ra_lat | latched register address |
| Cr_ps1/0 | Command register page select bits 0 & 1 |
| H_rd_z | host read (active low) |
| H_wr_z | host write (active low) |
| L_dma_rd_z, L_dma_wr_z | read/write strobes from the local DMA channel to the fifo |
| data_t | 16-bit TRISTATE data bus for moving data between blocks and on/off chip |
| L-breq | Local bus request; used by the local DMA to gain access to data_t and external data bus |
| H_req | Host bus request |
| R_breq | Remote bus request |
| Cida | 16-bit current local DMA Address |
| Tber | 16-bit transmit byte count register |
| Ac | 16-bit Address count |
| Bc | 16-bit Byte count |
| L_bux_cycle_request | Local DMA channel request for a 4-state bus cycle for a local memory access |
| R_bus_cycle_request | Remote DMA channel request for a 4-state bux cycle for a local memory to remote port access |
| Back_sync | Synchronized Bus request acknowledge |
| Rsar | 16-bit Remote start address register |
| Rber | 16-bit Remote byte count register |
| mux_rxd | multiplexed receive data: mux'd with transmit data for loopback |
| mux_rxc | multiplexed receive clock: mux'd with transmit clock for loopback |
| buf_txc | buffered transmit clock |
| buf_txd | local buffered transmit data |
| crc_data | inverted most significant bit of cyclic redundancy check register; used as data during transmission of frame check sequence |
| crc_err | crc error indicator for current packet reception |
| mc_hit | multicast address table hit; upper six bits of crc hashed to a location with a one set during destination address processing |
| crc [31:26] | upper six bits of crc (32-bit register) |
| Cr-txp | Command register transmit packet bit |
| RA | Register Address |
| Cr_ps0, ps1 | Command register page select bits 0 & 1 |
| H_rd_z | Host read (active low) |
| H-wr_z | Host write (active low) |

FIGURE 1B is a block diagram of a preferred embodiment of the MAC module 2 in FIGURE 1A, which the following text and additional figures will explain in more detail. In particular, FIGURE 1C is a circuit diagram of the active clock edge switch circuitry 120 with single cycle suppression and FIGURE 1D is a timing diagram of the circuit shown in FIGURE 1C, which illustrates the glitch-free operation and single cycle suppression features. The enhanced media access controller system 2 comprises at least one input, at least one output, clock coordinating circuitry 120 with at least one clock input and at least one clock output, which is located in clock module 3 in FIGURE 1B, and cyclic redundancy check circuitry, receive circuitry and transmit circuitry. The clock coordinating circuitry 120 comprises active clock edge switch circuitry 120 to switch the clock output(s) from a first edge to a second edge to enable data changes on the output(s) to remain approximately centered at a mid-bit time location. The cyclic redundancy check circuitry 5 (in FIGURE 1B) receives the clock output(s) from the clock coordinating circuitry 120. The receive circuitry 7 (in FIGURE 1B) receives at least one data input signal from the input(s). The receive circuitry 7 is coupled to the cyclic redundancy check circuitry and to the clock coordinating circuitry 120. The receive circuitry 7 works in conjunction with the cyclic redundancy check circuitry 5 (in FIGURE 1B) to check the data input signal(s) for errors. The transmit circuitry transmits at least one data output signal on the output(s). The transmit circuitry 9 (in FIGURE 1B) is coupled to the cyclic redundancy check circuitry 5 and to the clock coordinating circuitry 120 which works in conjunction with the cyclic redundancy check circuitry 5 to check the data output signal(s) for errors. The first edge is preferably a rising edge and the second edge is a falling edge, although this is subject to design alterations. The active clock edge switch circuitry 120 comprises circuitry that provides additional single cycle suppression. In addition, the media access controller further comprises tally circuitry to tabulate errors found in the data output signal(s) and the data input signal(s). The active clock edge switch circuitry 120 comprises cycle suppression circuitry to switch the clock output(s) from a first edge to a second edge within one cycle and preferably comprises a multiplexor 102 with a plurality of inputs and an output, and a strobe input. The plurality of inputs is coupled to the clock coordinating circuitry 120 to receive a clock input and an inverted clock input 100. The strobe input is coupled to a select clock input. The output is coupled to the transmitter and receiver. More particularly, the cycle suppression circuitry 101 comprises an OR gate 116, a first AND gate 114, a first flip flop 110, a second flip flop 108, an invertor 106, and a second AND gate 104. All flip flops are preferably D_type, positive edge triggered with asynchronous active low clear inputs. The OR gate 116 has a first and second input (A and B) and an output (Y), the second input of an OR gate 116 is coupled to a switch input. The first AND gate 114 has a first and second input (A and B) and an output (Y). The first input (A) of the first AND gate 114 is electrically coupled to a reset input. The first flip flop 110 having an input (D), an output (Q), an inverted output (QZ), a clear input (CLRZ), and a clock input (CLK). The input of the first flip flop 110 is coupled to the output of the OR gate 116. The output of the first flip flop 110 is coupled to the first input of the OR gate 116. The clock input of the first flip flop 110 is coupled to a first clock input, and the clear input of the first flip flop is coupled to the output of the first AND gate 114. The second flip flop 108 has an input, an output, an inverted output, a clear input, and a clock input. The clock input is coupled to a second clock input that is delayed (via invertors 112 and 118). The inverted output of the second flip flop 108 is coupled to the second input of first AND gate 114. The clear signal of the second flip flop 108 is coupled to a reset input. The input is coupled to the input of invertor 106. The invertor 106 has an input and an output. The second AND gate 104 has a first and second input (A and B) and an output (Y). The first input is connected to the output of the multiplexor 102. The second input is coupled to the output of the invertor 106. The input of the invertor 106 is coupled to the output of the first flip flop 110 and to the input of the second flip flop 108. In addition, a delay line 107 may also be coupled between the output of the first flip flop 110 and the input of the invertor 106. The delay line 107 (the 1D cell) represents a controlled delay buffer used to move the output of the glitch kill flip flop out of the skew danger zone (>5ns) between TXC and txc_z. The media access controller 2, the clock coordinating circuitry 120, and the active clock edge switch circuitry 120 are integrated circuits that are preferably integrated on a single piece of silicon.

## Claims

1. A media access controller system, comprising:
at least one input;
at least one output;
a clock co-ordinating circuit (120);
a cyclic redundancy check circuit (5) to receive a clock output from said clock co-ordinating circuit;
a receive circuit (7) to receive at least one data input signal from said input, and to work in conjunction with said cyclic redundancy check circuit to check said data input signal for errors; and
a transmit circuit (9) to transmit at least one data output signal on said output and to work in conjunction with said cyclic redundancy check circuitry to check said data output signal for errors;
wherein said clock co-ordinating circuit comprises a multiplexer (102) with a plurality of inputs and an output, and a strobe input, said plurality of inputs being coupled to receive a clock signal and an inverted clock signal, said strobe input being coupled to receive a select signal for switching the clock output signal between correspondence with the said clock signal and correspondence with the inverted clock signal and said clock output signal being coupled to said transmitter and said receiver,
wherein said clock co-ordinating circuit comprises a single cycle suppression circuit (101) which includes two flip-flops (110,108), controlled by a switch signal, a reset signal and the clock signal, and which suppresses the clock output signal for the duration of the one cycle in which the switching of the clock output signal occurs.

2. A media access controller according to claim 1, wherein said cycle suppression circuit (101) comprises:
an OR gate (116) with a first and second input and an output, said second input of said OR gate being coupled to receive the select signal;
a first AND gate (114) with a first and second input and an output, said first input of said first AND gate electrically coupled to receive the reset signal;
a first of the flip-flops (110) having an input, an output, an inverted output, a clear input, and a clock input, said input of said first flip-flop being coupled to said output of said OR gate, said output of said first flip-flop being coupled to said first input of said OR gate, said clock input of said first flip-flop being coupled to receive the clock signal, and said clear input of said first flip-flop being coupled to said output of said first AND gate;
a second of the flip-flops (108) having an input, an output, an inverted output, a clear input, and a clock input, said clock input being coupled to receive a delayed clock signal, said inverted output of said second flip-flop coupled to said second input of said first AND gate, said clear input of said second flip-flop being coupled to receive the reset signal,
an inverter (106) with an input and an output; and
a second AND gate (104) having a first and second input and an output, said first input being connected to receive said clock output signal from said multiplexer, said second input being coupled to said output of said inverter, and said input of said inverter (106) being coupled to said output of said first flip-flop and to said input of said second flip-flop.

## Patentansprüche

1. Medienzugriffssteuersystem mit:
zumindest einem Eingang,
zumindest einem Ausgang,
zumindest einer Taktkoordinationsschaltung (120),
einer zyklischen Redundanz-Prüfschaltung (5) zum Empfang einer Taktausgabe von der Taktkoordinationsschaltung,
einer Empfangsschaltung (7) zum Empfang zumindest eines Dateneingangssignals von dem Eingang und zum Arbeiten in Übereinstimmung mit der zyklischen Redundanz-Prüfschaltung zum Überprüfen des Dateneingangsignals auf Fehler und
einer Übermittlungsschaltung (19) zum Übermitteln von zumindest einem Datenausgabesignal an den Ausgang und zum Arbeiten in Übereinstimmung mit der zyklischen Redundanz-Prüfschaltung zum Überprüfen des Datenausgabesignals auf Fehler,
wobei die Taktkoordinationsschaltung einen Multiplexer (2) mit einer Anzahl von Eingängen und Ausgängen aufweist und einen Tasteingang, wobei die Anzahl von Eingängen zum Empfang eines Taktsignals und eines invertierten Taktsignals geschaltet sind, der Tasteingang zum Empfang eines Auswahlsignals zum Schalten des Taktausgabesignals zwischen Übereinstimmung mit dem Taktsignal und Übereinstimmung mit dem invertierten Taktsignal geschaltet ist und das Taktausgabesignal mit dem Übermittler und dem Empfänger verbunden ist;
wobei die Taktkoordinationsschaltung eine Einzelzyklus-Unterdrückungsschaltung (101) aufweist, die zwei Flip-Flops (110, 108) umfaßt, die durch ein Schaltsignal, ein Rücksetzsignal und das Taktsignal gesteuert werden, und die das Taktausgabesignal für die Dauer des einen Zyklus unterdrückt, in dem das Schalten des Taktausgabesignals auftritt.

2. Medienzugriffssteuerung nach Anspruch 1, wobei die Zyklus-Unterdrückungsschaltung (101) aufweist:
ein OR-Gatter (116) mit einem ersten und einem zweiten Eingang und einem Ausgang, wobei der zweite Eingang des OR-Gatters zum Empfang des Auswahlsignals geschaltet ist,
ein erstes AND-Gatter (114) mit einem ersten und einem zweiten Eingang und einem Ausgang, wobei der erste Eingang des ersten AND-Gatters elektrisch zum Empfang des Rücksetzsignals geschaltet ist,
wobei ein erstes der Flip-Flops (110) einen Eingang aufweist, einen Ausgang, einen invertierenden Ausgang, einen Löscheingang und einen Takteingang, wobei der Eingang des ersten Flip-Flops mit dem Ausgang des OR-Gatters verbunden ist, der Ausgang des ersten Flip-Flops mit dem ersten Eingang des OR-Gatters verbunden ist, der Takteingang des ersten Flip-Flops zum Empfang des Taktsignals geschaltet ist und der Löscheingang des ersten Flip-Flops mit dem Ausgang des ersten AND-Gatters verbunden ist,
wobei ein zweites der Flip-Flops (108) einen Eingang aufweist, einen Ausgang, einen invertierenden Ausgang, einen Löscheingang und einen Takteingang, wobei der Takteingang zum Empfang eines verzögerten Taktsignals geschaltet ist, der invertierende Ausgang des zweiten Flip-Flop mit dem zweiten Eingang des ersten AND-Gatters verbunden ist, der Löscheingang des zweiten Flip-Flops zum Empfang des Rücksetz-Signals verbunden ist,
einen Inverter (106) mit einem Eingang und einem Ausgang und
ein zweites AND-Gatter (104) mit einem ersten und einem zweiten Eingang und einem Ausgang, wobei der erste Eingang zum Empfang des Taktausgabesignals von dem Multiplexer geschaltet ist, der zweite Eingang mit dem Ausgang des Inverters verbunden ist und der Eingang des Inverters (106) mit dem Ausgang des ersten Flip-Flops und mit dem Eingang des zweiten Flip-Flops verbunden ist.

## Revendications

1. Système de dispositif de commande d'accès à des supports d'information, comprenant :
au moins une entrée ;
au moins une sortie ;
un circuit de coordination d'horloge (120) ;
un circuit de vérification de redondance cyclique (5) pour recevoir une sortie d'horloge dudit circuit de coordination d'horloge ;
un circuit de réception (7) pour recevoir au moins un signal d'entrée de données de ladite entrée et pour travailler en conjonction avec ledit circuit de vérification de redondance cyclique pour vérifier ledit signal d'entrée de données en ce qui concerne les erreurs ; et
un circuit d'émission (9) pour émettre au moins un signal de sortie de données sur ladite sortie et pour travailler en conjonction avec ledit circuit de vérification de redondance cyclique pour vérifier ledit signal de sortie de données en ce qui concerne les erreurs ;
dans lequel ledit circuit de coordination d'horloge comprend un multiplexeur (102) avec une pluralité d'entrées et une sortie, et une entrée d'échantillonnage, ladite pluralité d'entrées étant couplée de façon à recevoir un signal d'horloge et un signal d'horloge inversé, ladite entrée d'échantillonnage étant couplée de façon à recevoir un signal de sélection pour commuter le signal de sortie d'horloge entre une correspondance avec ledit signal d'horloge et une correspondance avec le signal d'horloge inversé, et ledit signal de sortie d'horloge étant couplé audit émetteur et audit récepteur,
dans lequel ledit circuit de coordination d'horloge comprend un circuit de suppression de cycle unique (101) qui comprend deux bascules (110, 108), commandé par un signal de commutation, un signal de remise à zéro, et le signal d'horloge, et qui supprime le signal de sortie d'horloge pendant la durée du cycle dans lequel la commutation du signal de sortie d'horloge se produit.

2. Dispositif de commande d'accès à des supports d'information selon la revendication 1, dans lequel ledit circuit de suppression de cycle (101) comprend :
une porte OU (116) avec une première et une deuxième entrée et une sortie, ladite deuxième entrée de ladite porte OU étant couplée pour recevoir le signal de sélection ;
une première porte ET (114) avec une première et une deuxième entrée et une sortie, ladite première entrée de ladite première porte ET étant électriquement couplée pour recevoir le signal de remise à zéro ;
une première des bascules (110) comprenant une entrée, une sortie, une sortie inversée, une entrée d'effacement et une entrée d'horloge, ladite entrée de ladite première bascule étant couplée à ladite sortie de ladite porte OU, ladite sortie de ladite première bascule étant couplée à ladite première entrée de ladite porte OU, ladite entrée d'horloge de ladite première bascule étant couplée de façon à recevoir le signal d'horloge, et ladite entrée d'effacement de ladite première bascule étant couplée à ladite sortie de ladite première porte ET ;
une deuxième des bascules (108) comprenant une entrée, une sortie, une sortie inversée, une entrée d'effacement et une entrée d'horloge, ladite entrée d'horloge étant couplée de façon à recevoir un signal d'horloge retardé, ladite sortie inversée de ladite deuxième bascule étant couplée à ladite deuxième entrée de ladite première porte ET, ladite entrée d'effacement de ladite deuxième bascule étant couplée de façon à recevoir le signal de remise à zéro ;
un inverseur (106) avec une entrée et une sortie ; et
une deuxième porte ET (104) comportant une première et une deuxième entrée et une sortie, ladite première entrée étant connectée de façon à recevoir ledit signal de sortie d'horloge dudit multiplexeur, ladite deuxième entrée étant couplée à ladite sortie dudit inverseur, et ladite entrée dudit inverseur (106) étant couplée à ladite sortie de ladite première bascule et à ladite entrée de ladite deuxième bascule.
